# EUROPÄISCHE PATENTSCHRIFT

(11) **EP 2 646 953 B1**
(45) Veröffentlichungstag und Bekanntmachung des Hinweises auf die Patenterteilung: **25.05.2016**
(21) Anmeldenummer: 11794030.4
(22) Anmeldetag: 29.11.2011
(51) Int. Cl.: G06K 19/07, G01L 1/22, G01L 3/00, G06F 3/02

(54) **PORTABLER DATENTRÄGER**
PORTABLE DATA CARRIER
SUPPORT DE DONNÉES PORTABLE

(30) Priorität: 30.11.2010 DE 102010052991
(43) Veröffentlichungstag der Anmeldung: 09.10.2013
(73) Patentinhaber: Giesecke & Devrient GmbH, 81677 München (DE)
(72) Erfinder: BALDISCHWEILER, Michael, 81825 München (DE); ASCHAUER, Hans, 81829 München (DE); SEYSEN, Martin, 80809 München (DE)
(86) Internationale Anmeldenummer: PCT/EP2011/005987
(87) Internationale Veröffentlichungsnummer: WO 2012/072240

(56) Entgegenhaltungen:
- EP-A1- 0 347 897
- DE-A1- 3 001 038
- DE-A1- 4 106 511
- DE-C1- 19 939 347
- DE-U1- 9 108 245
- US-A1- 2003 016 209
- US-A1- 2004 155 870
- US-A1- 2004 217 939
- US-A1- 2006 176 280
- US-A1- 2007 195 062

## Beschreibung

Die vorliegende Erfindung betrifft einen portablen Datenträger mit einer Vielzahl von als Taste ausgebildeten Bereichen.

Portable Datenträger im Sinne der vorliegenden Erfindung sind beispielsweise Chipkarten, Kreditkarten, Mobilfunkendgeräte, Smartphones und dergleichen. Sie weisen häufig Benutzerschnittstellen in Form von manuellen Eingabeeinrichtungen auf. Als Eingabeeinrichtungen sind dabei beispielsweise einfache Taster, Tastenfelder, Tastaturen, Touchpads oder berührungsempfindliche Displays bekannt. Dabei ist es bekannt, Tastenfelder oder Tastaturen in Form von mechanischen Folientastaturen auszubilden. Dagegen basiert das ortsaufgelöste Erkennen einer Berührung eines Touchpads oder eines berührungsempfindlichen Displays beispielsweise auf kapazitiven, induktiven, optischen oder akustischen Erkennungsverfahren.

Die Tasten von Tastenfeldern und Tastaturen oder auch einzelne Tasten können beispielsweise durch ortsaufgelöstes Erkennen eines auf die Datenträgeroberfläche ausgeübten Drucks realisiert werden. Dabei wird einem abgegrenzten Bereich der Oberfläche des Datenträgers eine Taste zugeordnet. Für mehrere Tasten sind entsprechend mehrere solcher abgegrenzten Bereiche vorgesehen.

Alternativ kann für jede Taste ein eigener Signalgeber vorgesehen sein. Solche Signalgeber können beispielsweise als Taster oder als druckempfindliche Sensoren ausgebildet sein, die einen abgegrenzten Bereich der Oberfläche des Datenträgers als Taste ausbilden. Solche Taster und Sensoren können mechanisch und/ oder elektrisch ausgebildet sein. Um zu erkennen, ob eine Taste beispielsweise durch Berührung oder Druckausübung betätigt wird, fragt eine Auswerteeinrichtung beispielsweise in Form eines Mikrocontrollers jede Taste einzeln und kontinuierlich ab. Das kontinuierliche Abfragen der einzelnen Tasten kann alternativ über eine zusätzliche Elektronik realisiert werden, die beim Erkennen des Betätigens einer der Tasten ein entsprechendes Signal an die Auswerteeinrichtung sendet.

In jedem Falle werden zur Abfrage und Ansteuerung der verschiedenen Taster oder Sensoren zwei Leitungen pro Taste benötigt. Dadurch ergibt sich zum einen ein aufwändiges Abfrage- und Ansteuerverfahren. Zum anderen ergibt sich eine hohe Anzahl von Zuleitungen. Die Anzahl der Zuleitungen kann prinzipiell reduziert werden, indem so genannte Dioden-Brücken für Kreuzabfragen eingesetzt werden. Dies erhöht jedoch die Anzahl der notwendigen Bauteile und somit die Herstellungskosten. Der Einsatz solcher Dioden-Brücken ist daher insbesondere bei Datenträgern, die in großen Stückzahlen preiswert hergestellt werden sollen, ungünstig.

Für ein numerisches Tastenfeld mit zehn Tasten (Tasten "0" bis "9") werden zwanzig Zuleitungen benötigt. Je nach Anordnung der Tasten in dem Tastenfeld ist bereits in diesem einfachen Fall ein kreuzungsfreies Verlegen der Zuleitungen schwierig oder unmöglich, so dass beispielsweise so genannte Durchsteiger zum kreuzungsfreien Verlegen benötigt werden. Dies erhöht wiederum den Herstellungsaufwand und erhöht auch die mechanische Aufbauhöhe eines solchen Tastenfeldes, was insbesondere bei flachen portablen Datenträgern, wie beispielsweise Chipkarten, ungünstig ist.

Die US 2004/0155870 A1 offenbart ein Hybrid-Eingabegerät beispielsweise für Mobiltelefone und Uhren. Die Tasten des Eingabegeräts sind auf je zwei seitlich angeordneten Dehnungsmessstreifen montiert. Ein Tastendruck erzeugt ein unverwechselbares Dehnungsmuster, das durch die Streifen gemessen wird.

Aus der US 2006/0176280 A1 ist eine Tastatur für ein Handy bekannt, bei dem jede Taste über einen Klappdorn und einen zusätzlichen Dehnungsmessstreifen verfügt. Der Messstreifen detektiert, sobald eine Taste nur leicht berührt wird. Das Gerät gibt dann beispielsweise ein Tonsignal aus; dadurch wird die "blinde" Anwendung (etwa beim Autofahren) erleichtert. Erst wenn die Taste stark gedrückt wird, klappt der Dorn um, schließt einen Kontakt und löst die eigentliche Tastenfunktion aus.

Aus der US 2004/0217939 A1 ist eine Tastatur mit erhabenen Tasten bekannt, die als Zubehör für elektronische Geräte jeglicher Art eingesetzt werden kann. Die Tastatur ist je nach verwendeter Peripherie anpassbar und wird mithilfe einer matrixförmigen Einheit ausgelesen, die Zeilen und Spalten getrennt erfasst.

Die matrixförmige Einteilung einer Tastatur in Zeilen und Spalten ist etwa aus US 2004/0217939, DE 30 01 038 A1, DE 91 08 245 U und DE 41 06 511 A bekannt. Dabei werden die Zeilen und die Spalten getrennt ausgewertet, um die genaue Position des Tastendrucks zu bestimmen.

Aufgabe der vorliegenden Erfindung ist es daher, einen portablen Datenträger mit einer Vielzahl von als Taste ausgebildeten Bereichen anzugeben, der einfach herstellbar ist und bei dem sowohl das Erkennen der Betätigung einer Taste als auch die notwendige Beschaltung der Tasten unkompliziert ist.

Diese Aufgabe wird durch einen portablen Datenträger mit den Merkmalen des unabhängigen Anspruchs gelöst. Vorteilhafte Ausgestaltungen und Weiterbildungen sind in den abhängigen Ansprüchen angegeben.

Der erfindungsgemäße portable Datenträger weist eine Vielzahl von Bereichen auf, die jeweils als Taste ausgebildet sind. Erfindungsgemäß ist jedem Bereich der Vielzahl von als Taste ausgebildeten Bereichen jeweils ein erster und ein zweiter Dehnungsmessstreifen zugeordnet.

Im Folgenden werden die als Taste ausgebildeten Bereiche auch als Taste und der Bereich, den eine solche Taste auf der Oberfläche des Datenträgers einnimmt, als Tastenbereich bezeichnet. Der erste und der zweite Dehnungsmessstreifen sind bezüglich des zugeordneten Tastenbereichs derart angeordnet, dass ein auf den Tastenbereich ausgeübter Druck eine Veränderung des elektrischen Widerstandes beider Dehnungsmessstreifen bewirkt. Vorzugsweise sind die Tastenbereiche auf der Oberfläche des portablen Datenträgers visuell gekennzeichnet. Die Tastenbereiche sind vorzugsweise deformierbare Bereiche einer ansonsten starren oder zumindest bei gleichem Druck weniger deformierbaren Datenträgeroberfläche.

Dehnungsmessstreifen sind prinzipiell in verschiedenen Bauformen und aus verschiedenen Materialien bekannt. Sie sind im einfachsten Fall vornehmlich gegenüber einer Dehnung oder Stauchung in einer Richtung empfindlich, wobei typischerweise eine Mehrzahl schmaler Leiterbahnen, die auch als Leiterbahnstruktur bezeichnet werden, in diese Richtung verläuft. Bei Stauchung oder Dehnung des Dehnungsmessstreifens verändern sich der Querschnitt und die Länge dieser schmalen Leiterbahnen und somit deren elektrischer Widerstand. Üblicherweise sind die schmalen Leiterbahnen hintereinander geschaltet, was zu einer mäanderförmigen Leiterbahnstruktur führt, in der die schmalen Leiterbahnen meist parallel angeordnet sind. Neben solchen parallelen Anordnungen von schmalen Leiterbahnen sind auch Dehnungsmessstreifen bekannt, in denen die Leiterbahnstruktur sternförmig oder rosettenartig ausgebildet ist, wobei die schmalen Leiterbahnen radial bezüglich eines vorgegebenen Punktes verlaufen. Nachfolgend werden all diese Strukturen aus Gründen der Einfachheit als Dehnungsmessstreifen bezeichnet.

Vorteilhaft sind der erste und der zweite Dehnungsmessstreifen eines Tastenbereichs auf unterschiedlichen Schichten des Datenträgers angeordnet. Auf diese Weise wird eine große Flexibilität bei der Herstellung des Datenträgers erreicht.

Vorteilhaft sind der erste und der zweite Dehnungsmessstreifen eines Tastenbereichs auf gegenüberliegenden Seiten einer elektrisch isolierenden Trägerschicht angeordnet. So wird ein Kurzschluss zwischen dem ersten und zweiten Dehnungsmessstreifen eines Tastenbereichs in einfacher Weise verhindert. Ferner entfallen auch zu isolierende Kreuzungspunkte von elektrischen Zuleitungen, da diese ebenfalls durch die Trägerschicht gegeneinander isoliert werden. Die Trägerschicht kann dabei eine innenliegende Schicht eines mehrschichtigen Datenträgerkörpers sein. Es kann sich um eine Schicht mit einer Dicke handeln, welche einen wesentlichen Anteil der gesamten Dicke eines kartenförmigen Datenträgers ausmacht, zum Beispiel die Kartenkörperkernschicht. Es kann sich aber auch um eine dünne Folie handeln, welche den ersten und den zweiten Dehnungsmessstreifen eines Tastenbereichs lediglich gegeneinander isoliert, ohne dass ein nennenswerter Abstand zwischen den beiden Dehnungsmessstreifen hergestellt wird. Die Trägerschicht kann im Falle eines einschichtigen Datenträgerkörpers auch der Datenträgerkörper selbst sein.

Die Anordnung des ersten und zweiten Dehnungsmessstreifens eines Tastenbereichs auf gegenüberliegenden Seiten der Trägerschicht hat zur Folge, dass bei einer Krafteinwirkung auf den Tastenbereich beispielsweise der erste Dehnungsmessstreifen gedehnt wird, wohingegen der zweite Dehnungsmessstreifen gestaucht wird, oder umgekehrt, je nachdem von welcher Seite des Datenträgers aus der Tastenbereich gedrückt wird. Auf diese Weise wird zum einen eine hohe Empfindlichkeit des Tastenbereichs erzielt, da zwei gegenläufige Widerstandsänderungen für jeden Tastenbereich vorliegen. Zum anderen kann auch der Anwendungsbereich der Tastenbereiche erweitert werden, indem von beiden Seiten des Datenträgers unterschiedliche Eingaben realisiert werden können. Beispielsweise können durch unterschiedliche visuelle Kennzeichnungen der Tastenbereiche auf Vorder- und Rückseite des Datenträgers unterschiedliche Funktionen kenntlich gemacht werden.

Nach einer Ausgestaltung der Erfindung sind der erste und der zweite Dehnungsmessstreifen eines Tastenbereichs auf unterschiedlichen Schichten des Datenträgers angeordnet. Aus Gründen einer vereinfachten Herstellung des Datenträgers kann die Anordnung derart ausgebildet sein, dass die Schichten jeweils einen oder mehrere Dehnungsmessstreifen aufweisen. Ein Vorteil dieser Anordnung kann ferner darin liegen, die jeweils auf den Schichten angeordneten Dehnungsmessstreifen optimal an die in den unterschiedlichen Schichten auftretenden Biegemomente anpassen zu können.

Vorzugsweise sind der erste und der zweite Dehnungsmessstreifen eines Tastenbereichs zueinander fluchtend auf den gegenüberliegenden Seiten der Trägerschicht angeordnet. So wird sichergestellt, dass bei einem Tastendruck durch einen Benutzer beide Dehnungsmessstreifen deformiert werden. Zueinander fluchtend bedeutet, dass der erste und der zweite Dehnungsmessstreifen auf den gegenüberliegenden Seiten der Schicht des Datenträgerkörpers bezüglich ihrer flächigen Ausdehnung deckungsgleich oder zumindest teilweise überlappend angeordnet sind. Das heißt, sie sind bei Betrachtung des Tastenbereichs in Draufsicht im Wesentlichen übereinander angeordnet, jedoch auf gegenüberliegenden Seiten der Trägerschicht. Es kann ausreichend sein, wenn sich der erste und der zweite Dehnungsmessstreifen eines Tastenbereichs flächenmäßig zumindest überschneiden. Als fluchtend wird insbesondere auch angesehen, wenn die flächigen Ausdehnungen der Dehnungsmessstreifen fluchtend sind, d.h. es kommt nicht notwendig auf die Orientierung der Leiterbahnen der Dehnungsmessstreifen an. Die Fläche eines Dehnungsmessstreifens wird dabei im Wesentlichen durch die äußersten Leiterbahnen des Dehnungsmessstreifens begrenzt.

Der erste und der zweite Dehnungsmessstreifen eines Tastenbereichs können in dem Tastenbereich auch benachbart zueinander angeordnet sein. Hierbei überschneiden sich die flächigen Ausdehnungen der Dehnungsmessstreifen nicht. Vorzugsweise sind der erste und zweite Dehnungsmessstreifen in diesem Fall auf der gleichen Seite der Trägerschicht angeordnet. Aber selbst wenn sie auf gegenüberliegenden Seiten der Trägerschicht angeordnet sind, können sie bei Betrachtung des Tastenbereichs in Draufsicht benachbart zueinander angeordnet sein. Vorteilhaft sind die Dehnungsmessstreifen derart nebeneinander angeordnet, dass beim Drücken eines Tastenbereichs jeweils der erste und der zweite Dehnungsmessstreifen dieses Tastenbereichs gleichzeitig deformiert werden.

Die Leiterbahnen des ersten und des zweiten Dehnungsmessstreifens eines Tastenbereichs können auch ineinander liegen. Im Falle einer Mäanderstruktur können die Mäander ineinander verzahnt angeordnet sein. Im Falle einer sternförmigen oder rosettenartigen Leiterbahnstruktur können beispielsweise Stern- oder Rosettenstrukturen mit unterschiedlichen Radien ineinander liegen.

In einer bevorzugten Ausgestaltung der Erfindung weisen der erste und zweite Dehnungsmessstreifen eines Tastenbereichs jeweils eine Mäanderstruktur auf, wobei vorzugsweise sich die Mäanderstrukturen des ersten und zweiten Dehnungsmessstreifens in eine allgemeine Richtung erstrecken und diese Richtungen senkrecht zueinander angeordnet sind. Insbesondere ist dies vorteilhaft, wenn der erste und der zweite Dehnungsmessstreifen auf gegenüberliegenden Seiten einer Schicht des Datenträgerkörpers angeordnet sind, bevorzugt zueinander fluchtend.

Der erste und zweite Dehnungsmessstreifen eines Tastenbereichs können, wenn sie sternförmig oder rosettenartig ausgebildet sind, auf gegenüberliegenden Seiten einer Schicht des Datenträgerkörpers vollständig deckungsgleich angeordnet werden.

Die Dehnungsmessstreifen werden auf dem portablen Datenträger als gedruckte oder geätzte, elektrisch leitfähige Leiterbahnstrukturen ausgebildet. Diese Art der Herstellung der Dehnungsmessstreifen auf dem Datenträgerkörper bietet im Vergleich mit alternativen Möglichkeiten der Anbringung von beispielsweise Foliendehnungsmessstreifen Vorteile bezüglich Kosten, Robustheit und mechanischer Verbindung mit dem Datenträger. Weiterhin werden vorzugsweise auch die die verschiedenen Dehnungsmessstreifen verbindenden elektrischen Leitungen sowie etwaige Endabgriffe als gedruckte oder geätzte Leiterstruktur ausgebildet. Ebenso können auch Teile der Elektronik, die beispielsweise für eine Auswerteeinrichtung notwendig sind, als eine solche geätzte oder gedruckte Struktur ausgebildet sein.

Das Aufdrucken kann mit Hilfe einer Maske oder maskenlos geschehen. Dabei wird ein elektrisch leitendes Material auf einen Datenträgerkörper des portablen Datenträgers oder auf eine Trägerschicht desselben gedruckt. Bei dem elektrisch leitenden Material handelt es sich beispielsweise um ein Metall wie Silber, eine Legierung wie beispielsweise Nickel-Chrom, Konstantan oder Isabellin, um eine nanoskalige Suspension oder um eine funktionelle Tinte. Diese wird beispielsweise in einem Ink-Jet- oder einem Aerosol-Druckverfahren aufgebracht. Alternativ können die Dehnungsmessstreifen auch durch Ätzen einer elektrisch leitenden Schicht hergestellt werden. Ein aufgedruckter oder geätzter Dehnungsmessstreifen führt zu einer robusten, kostengünstigen Taste mit niedriger Bauhöhe.

In einer bevorzugten Ausgestaltung sind die Dehnungsmessstreifen der Tastenbereiche, vorzugsweise aller Tastenbereiche, bezüglich ihrer elektrischen Eigenschaften identisch, insbesondere elektrisch identisch aufgebaut. Dies vereinfacht den Aufbau des Datenträgers.

Im Falle eines flächigen Datenträgers mit einem mehrschichtig ausgebildeten Datenträgerkörper können verschiedene Schichten, vorzugsweise aus geeigneten Kunststoffmaterialien, miteinander verbunden, beispielsweise laminiert werden. Um die Sensibilität zu erhöhen, können eine oder mehrere Schichten des Datenträgerkörpers in der Nähe eines Dehnungsmessstreifens mit einer oder mehreren Aussparungen versehen sein. Die Aussparungen befinden sich in dem Datenträgerkörper vorzugsweise seitlich und/ oder oberhalb und/ oder unterhalb des Dehnungsmessstreifens. Besonders bevorzugt befinden sich seitlich des Dehnungsmessstreifens Aussparungen, während oberhalb und unterhalb des Dehnungsmessstreifens keine Aussparungen vorgesehen sind. Dadurch wird die Empfindlichkeit des Dehnungsmessstreifens erhöht, da sich der Datenträgerkörper entsprechend leichter verformt, der Dehnungsmessstreifen stärker verformt wird und dementsprechend dessen Widerstandsänderung größer ausfällt. Die geschaffene Aussparung kann als Hohlraum ausgestaltet sein oder mit einem flexiblen oder kompressiblen Material vollständig oder teilweise gefüllt sein. Entsprechend kann das aufgrund der Aussparung veränderte Verformungsverhalten geeignet eingestellt werden.

In einer vorteilhaften Ausgestaltung sind die ersten Dehnungsmessstreifen aller Tastenbereiche, vorzugsweise aber nur einiger Tastenbereiche, hintereinander geschaltet. Die Tastenbereiche, deren erste Dehnungsmessstreifen hintereinander geschaltet sind, bilden eine Gruppe erster Art von Tastenbereichen. Mit anderen Worten sind die Tastenbereiche der Gruppe erster Art in einer Weise gruppiert, dass deren jeweilige erste Dehnungsmessstreifen hintereinander geschaltet sind. Hintereinander geschaltet bedeutet insbesondere elektrisch in Reihe geschaltet. Durch die Hintereinanderschaltung der ersten Dehnungsmessstreifen der Tastenbereiche einer Gruppe erster Art kann mit Hilfe einer einzigen Widerstandsmessung festgestellt werden, ob eine der Tasten der Gruppe erster Art betätigt wird, das heißt ob auf einen der Tastenbereiche ein geeigneter Druck ausgeübt wird. Entsprechend müssen lediglich zwei Zuleitungen beispielsweise in Form von Endabgriffen vorgesehen werden. Es kann genau eine Gruppe erster Art vorgesehen sein, d.h. es können alle Tastenbereiche einer einzigen Gruppe erster Art angehören. Es kann aber auch eine Mehrzahl von Gruppen erster Art vorgesehen sein. Dabei ist es vorteilhaft, wenn jeder Tastenbereich einer der Gruppen erster Art angehört.

Durch die Hintereinanderschaltung der ersten Dehnungsmessstreifen in einer Gruppe erster Art können alle Tasten dieser Gruppe gleichzeitig überwacht werden. Dadurch sinken der für die Überwachung einer solchen Vielzahl von Tasten notwendige Beschaltungs- und Überwachungsaufwand und der damit verbundene Energiebedarf. Die dadurch gewonnene Information, dass zumindest eine der Tasten betätigt wird, kann mit Vorteil für verschiedene Zwecke verwendet werden. Beispielsweise können elektronische Vorrichtungen, die sich gegebenenfalls auf dem portablen Datenträger befinden, aus einem Schlafzustand in einen Betriebszustand versetzt werden und somit ein mit dem Betriebszustand einhergehender erhöhter Energiebedarf auf einen kurzen Zeitraum beschränkt werden. Beispielsweise kann die Beleuchtung einer Anzeigevorrichtung aktiviert werden.

In einer vorteilhaften Ausgestaltung sind auch die zweiten Dehnungsmessstreifen aller Tastenbereiche, vorzugsweise aber nur einiger Tastenbereiche, hintereinander geschaltet. Die Tastenbereiche, deren zweite Dehnungsmessstreifen hintereinander geschaltet sind, bilden eine Gruppe zweiter Art von Tastenbereichen. Mit anderen Worten sind die Tastenbereiche der Gruppe zweiter Art in der Weise gruppiert, dass deren jeweilige zweite Dehnungsmessstreifen hintereinander geschaltet sind. Gruppe zweiter Art bedeutet hierbei analog zur Gruppe erster Art, dass es sich um eine Gruppierung bezüglich der zweiten Dehnungsmessstreifen handelt. Es kann genau eine Gruppe zweiter Art vorgesehen sein, d.h. es können alle Tastenbereiche einer einzigen Gruppe zweiter Art angehören. Es kann aber auch eine Mehrzahl von Gruppen zweiter Art vorgesehen sein. Dabei ist es vorteilhaft, wenn jeder Tastenbereich einer der Gruppen zweiter Art angehört. Weiterhin ist es möglich, dass die Anzahl der Gruppen zweiter Art gleich der Anzahl der Tastenbereiche ist, d.h. jeder Gruppe zweiter Art ist genau ein Tastenbereich zugeordnet.

Durch Vorsehen von zumindest einer Gruppe zweiter Art zusätzlich zu der zumindest einen Gruppe erster Art kann erkannt werden, welche der Vielzahl von Tasten betätigt wird. Die Verwendung von derart hintereinander geschalteten Dehnungsmessstreifen macht somit ein ständiges Abfragen aller einzelnen Tasten überflüssig und vereinfacht die Beschaltung.

In einer bevorzugten Ausgestaltung der Erfindung ist jeder Tastenbereich genau einer Gruppe erster Art und genau einer Gruppe zweiter Art zugeordnet, wobei verschiedene Bereiche jeweils verschiedenen Gruppen erster und/oder zweiter Art zugeordnet sind. Auf diese Weise ist eine eindeutige Identifizierung desjenigen Tastenbereichs, auf den Druck ausgeübt wird, anhand einer Auswertung des Widerstandswertes der Gruppen erster und zweiter Art möglich. Denn jedem Tastenbereich ist eine eindeutige Kombination eines ersten und eines zweiten Dehnungsmessstreifen zugeordnet.

Im Falle einer derartigen Gruppierung der Tastenbereiche in Gruppen erster und zweiter Art, aber auch ohne Gruppen von hintereinander geschalteten Dehnungsmessstreifen, erfolgt die Auswertung vorteilhaft anhand einer Änderung des elektrischen Widerstands eines ersten Dehnungsmessstreifens oder einer Gruppe erster Art von hintereinander geschalteten ersten Dehnungsmessstreifen und einer Änderung des elektrischen Widerstands eines zweiten Dehnungsmessstreifens oder einer Gruppe zweiter Art von hintereinander geschalteten zweiten Dehnungsmessstreifen. Vorteilhaft ist dazu eine Auswerteeinrichtung vorgesehen. Da die Gruppen erster Art und die Gruppen zweiter Art durch Änderung des elektrischen Widerstands eindeutig identifizierbar sind, ist auch eine eindeutige Identifizierung der Tastenbereiche möglich. Da nur die Widerstandsänderungen der Gruppen und nicht aller Dehnungsmessstreifen einzeln überwacht werden müssen, ergibt sich eine einfache Auswertung und Beschaltung.

Bevorzugt sind die Tastenbereiche in einem Raster auf dem Datenträger angeordnet. So kann auf einfache Weise eine Tastatur auf dem Datenträger geschaffen werden. Es ist vorteilhaft, wenn die Tastenbereiche als eine Reihe, als eine Spalte oder als Matrix auf dem Datenträger angeordnet sind. Weiter vorteilhaft ist es, wenn alle Tastenbereiche einer bestimmten Reihe einer bestimmten Gruppe erster Art zugeordnet sind und/ oder alle Tastenbereiche einer bestimmten Spalte einer bestimmten Gruppe zweiter Art zugeordnet sind. So kann der Tastenbereich, auf den eine Kraft ausgeübt wird, anhand der Spalte und Reihe, in der er sich befindet, identifiziert werden.

In einer bevorzugten Ausgestaltung sind die ersten und/ oder zweiten Dehnungsmessstreifen der Gruppen erster bzw. zweiter Art elektrisch identisch aufgebaut, so dass jede Gruppe den gleichen elektrischen Widerstand aufweist, wenn keine der Tasten betätigt wird. Vorteilhaft weist hierbei jede Gruppe erster bzw. zweiter Art die gleiche Anzahl von Tastenbereichen auf. Dies vereinfacht das Verfahren zum Auffinden derjenigen Gruppe, in der ein Dehnungsmessstreifen in Folge eines Tastendrucks einen veränderten Widerstandswert aufweist.

Eine Auswerteeinrichtung, die den elektrischen Widerstand der Dehnungsmessstreifen erfasst, kann auf dem portablen Datenträger oder außerhalb des portablen Datenträgers als externes Bauteil angeordnet sein. Im einfachsten Fall sind die Dehnungsmessstreifen auf der Oberfläche des Datenträgers des portablen Datenträgers angeordnet. Vorzugsweise sind die Dehnungsmessstreifen jedoch im Inneren des Datenträgers so angeordnet, dass sie geschützt sind. Dies kann insbesondere bei mehrschichtig aufgebauten Datenträgern leicht realisiert werden. Bei der Vielzahl von Tasten kann es sich um ein Tastenfeld, eine Tastatur oder um einzelne Tasten handeln, die auf dem Datenträger beliebig angeordnet sein können.

Es kann eine Einrichtung zum Detektieren einer Abweichung des elektrischen Widerstands eines Dehnungsmessstreifens oder einer Gruppe von hintereinander geschalteten Dehnungsmessstreifen von dem elektrischen Widerstand eines weiteren Dehnungsmessstreifens oder einer weiteren Gruppe von hintereinander geschalteten Dehnungsmessstreifen vorgesehen sein. Mit Hilfe einer solchen Einrichtung, welche auch als Differenziereinrichtung bezeichnet werden kann, können Veränderungen des elektrischen Widerstands der Dehnungsmessstreifen, die nicht auf einen Tastendruck zurückzuführen sind, überwacht werden. Dabei kann es sich beispielsweise um Widerstandsänderungen handeln, die auf eine Temperaturänderung, auf das Vorliegen externer Felder oder auch auf ein Verformen des gesamten Datenträgerkörpers des portablen Datenträgers zurückzuführen sind. Entsprechend kann das Betätigen einer Taste sicher von solchen, den Widerstandswert von Dehnungsmessstreifen verändernden Einflüssen unterschieden werden. Solange sich beispielsweise die Widerstandswerte der Gruppen erster und/ oder zweiter Art im gleichen Wertebereich befinden, wird keine Auswertung vorgenommen, d.h. es wird kein Tastendruck detektiert. Weicht einer der Werte jedoch von den anderen ab, wird eine Auswertung vorgenommen, d.h. die gedrückte Taste wird wie oben beschrieben anhand der entsprechenden Widerstandsänderungen identifiziert. Temperatureinflüsse oder Verbiegungen des gesamten Datenträgerkörpers können mittels einer solchen Differenziereinrichtung alternativ auch dadurch von Tasteneingaben unterschieden werden, dass Tasteneingaben von einem Benutzer vergleichsweise schnelle Widerstandsänderungen der Dehnungsmessstreifen hervorrufen, verglichen mit unbeabsichtigen Deformationen des gesamten Datenträgerkörpers oder temperaturbedingten Widerstandsänderungen.

Bevorzugte Ausführungen der Erfindung werden nachfolgend beispielhaft anhand der begleitenden Figuren erläutert. Die Beispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen.

Es zeigen:
Fig.1 einen portablen Datenträger mit einem Eingabebereich,
Fig. 2a - 2e einen Tastenbereich in unterschiedlichen Ansichten,
Fig. 3, 4 verschiedene Ausführungsbeispiele eines Eingabebereichs mit vier Tastenbereichen und
Fig. 5a - 5c einen portablen Datenträger mit einem Eingabebereich mit 16 Tastenbereichen in unterschiedlichen Ansichten.

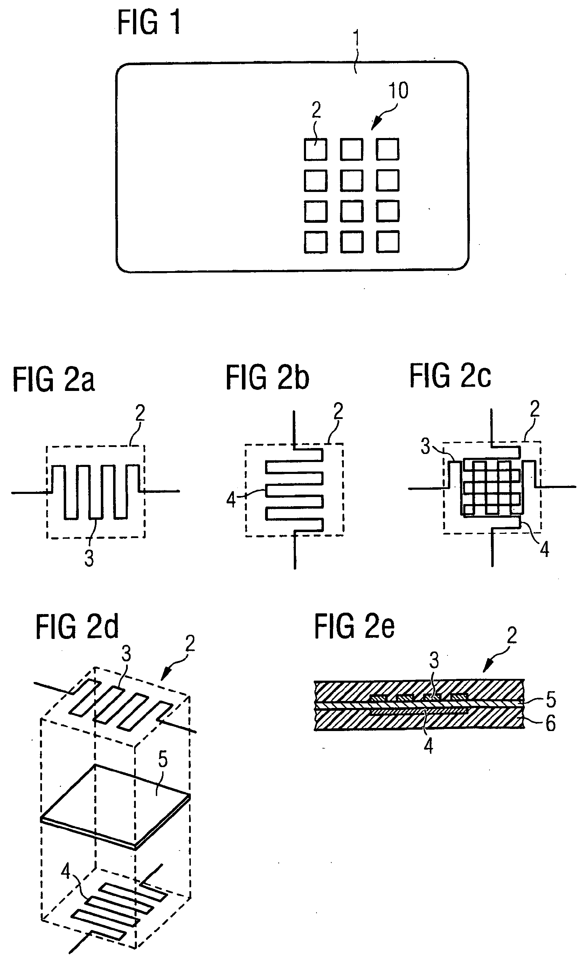

In Fig.1 ist ein portabler, kartenförmiger Datenträger 1 in Form einer Chipkarte im ID-1 Format gemäß ISO 7816 dargestellt. Der Datenträger 1 kann metallische Kontaktflächen für eine kontaktbehaftete Daten- und/ oder Energieübertragung von und/oder zu einem externen Gerät aufweisen. Die Kontaktflächen können aber auch entfallen, zum Beispiel falls der Datenträger 1 nur für eine kontaktlose Kommunikation eingerichtet ist oder keine Kommunikationsschnittstelle erfordert.

Auf dem portablen Datenträger 1 ist ein Eingabebereich 10 angeordnet, welcher Tastenbereiche 2 umfasst. In diesem Ausführungsbeispiel weist der Eingabebereich 10 zwölf Tastenbereiche 2 auf, welche in einer orthogonalen Matrix mit vier Reihen und drei Spalten angeordnet sind. Die Tastenbereiche können durch visuelle Kennzeichnung, beispielsweise durch Aufdrucke, auf dem portablen Datenträger 1 für einen Benutzer kenntlich gemacht sein. Es können sich auch Kennzeichnungen auf den Tastenbereichen 2 befinden, welche eine Belegung des jeweiligen Tastenbereichs 2 angeben, beispielsweise die Ziffern "0" bis "9", sowie zwei Sonderzeichen, wie "#" und "*". Bei einem Druck auf einen Tastenbereich 2 durch einen Benutzer wird eine der Belegung des Tastenbereichs 2 entsprechende Eingabe an eine elektronische Einrichtung auf dem Datenträger 1 oder an ein mit dem Datenträger 1 kommunizierendes externes Gerät übermittelt.

In Fig. 2a bis 2e ist beispielhaft einer der Tastenbereiche 2 in unterschiedlichen Ansichten dargestellt. Hierbei zeigen Fig. 2a eine Draufsicht, Fig. 2b eine Ansicht von unten, Fig. 2c eine gedachte Durchsicht bzw. eine gemeinsame Darstellung von Ober- und Unterseite, Fig. 2d eine Explosionsdarstellung und Fig. 2e einen Querschnitt. Aus Gründen der besseren Darstellbarkeit wurde gegebenenfalls auf Schichten des Datenträgers verzichtet, welche die Sicht auf die funktionalen Teile, insbesondere die Dehnungsmessstreifen 3,4 des Tastenbereichs 2 verdecken würden. Dies gilt auch für die übrigen Figuren.

In Fig 2a ist ein erster Dehnungsmessstreifen 3 des Tastenbereichs 2 dargestellt, welcher auf einer ersten Seite einer Schicht 5 (siehe Fig. 2d, 2e) angeordnet ist. Fig. 2b zeigt einen zweiten Dehnungsmessstreifen 4 auf einer zweiten Seite der Schicht 5. Die Schicht 5 wirkt somit als Trägerschicht für die Dehnungsmessstreifen 3, 4. Sie kann zum Beispiel aus Polycarbonat bestehen.

Die Mäanderstrukturen der beiden Dehnungsmessstreifen 3, 4 sind senkrecht zueinander angeordnet, wie auch in Fig. 2c dargestellt. Die um 90° versetzte Anordnung der Dehnungsmessstreifen 3, 4 erhöht die Messempfindlichkeit des Tastenbereichs 2 für eine Krafteinwirkung, d.h. für einen Druck auf den Tastenbereich 2. Der erste Dehnungsmessstreifen 3 und der zweite Dehnungsmessstreifen 4 sind zueinander fluchtend auf gegenüberliegenden Seiten der Schicht 5 angeordnet. In diesem Ausführungsbeispiel überlappen die flächigen Ausdehnungen des ersten und zweiten Dehnungsmessstreifens 3, 4, wobei die Enden der Dehnungsmessstreifen 3, 4 hier jeweils über den Überlappungsbereich hinausragen. Im Falle von Dehnungsmessstreifen mit beispielsweise quadratischer oder kreisrunder Grundfläche ist ein vollständiges Überlappen im Sinne eines kongruenten Überdeckens der beiden Dehnungsmessstreifen zueinander auf den gegenüberliegenden Seiten der Schicht 5 möglich.

In Fig. 2d ist die relative Lage der Dehnungsmessstreifen 3, 4 zueinander und bezüglich der Schicht 5 in einer Explosionszeichnung dargestellt. Fig. 2e zeigt einen Schnitt durch den Datenträgerkörper 6 im Bereich des Tastenbereichs 2, welcher die innenliegende Schicht 5 mit den beiden Dehnungsmessstreifen 3, 4, umfasst, wobei die zueinander senkrecht angeordneten Mäanderstrukturen der Dehnungsmessstreifen 3, 4 erkennbar sind.

Wird auf den Tastenbereich 2 eine Kraft ausgeübt, beispielsweise durch Druck eines Fingers eines Benutzers, deformiert sich der Datenträgerkörper 6 in dem Tastenbereich 2. Die Deformation kann anhand von Änderungen des elektrischen Widerstands der Dehnungsmessstreifen 3, 4 detektiert werden. Bei einem Druck von der Oberseite des Datenträgers 1 aus wird der erste Dehnungsmessstreifen 3 gestaucht, während der zweite Dehnungsmessstreifen 4 gedehnt wird. Dies erfolgt aufgrund der Beabstandung der beiden Dehnungsmessstreifen 3, 4, welche aus der Dicke der Schicht 5 resultiert. Da umgekehrt bei einem Druck von der Unterseite des Datenträgers 1 aus der erste Dehnungsmessstreifen 3 gedehnt und der zweite Dehnungsmessstreifen 4 gestaucht werden, kann dies als eine abweichende Eingabe interpretiert werden. Die Tastenbereiche 2 des Eingabebereichs 10 können dazu auf der Oberseite und der Unterseite des Datenträgers 1 unterschiedliche Kennzeichnungen aufweisen.

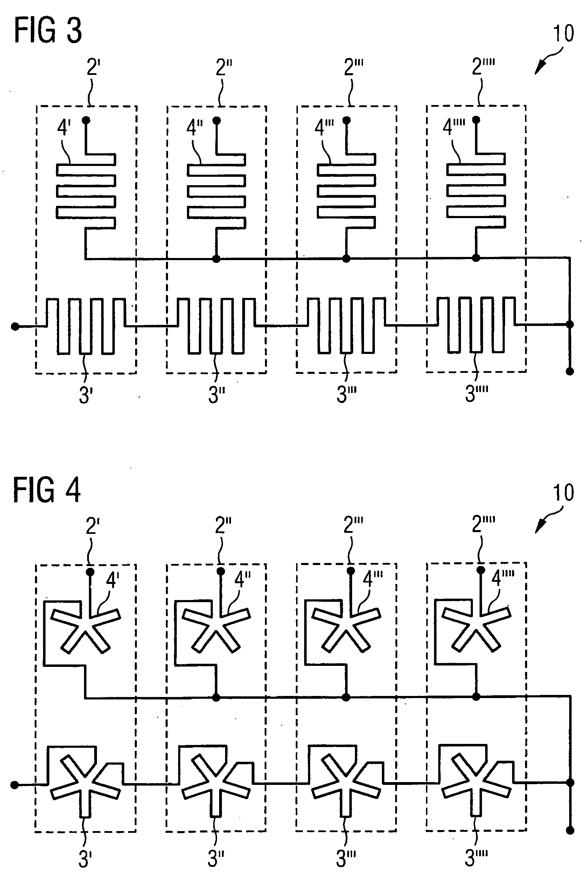

In Fig. 3 und 4 sind verschiedene Ausführungsbeispiele eines Eingabebereichs 10 mit vier Tastenbereichen 2 dargestellt. Sie unterscheiden sich durch die Art der Dehnungsmessstreifen. In dem in Fig. 3 dargestellten Ausführungsbeispiel werden mäanderförmige Dehnungsmessstreifen 3,4 verwendet, wohingegen in dem in Fig. 4 dargestellten Ausführungsbeispiels sternförmige bzw. rosettenartige Dehnungsmessstreifen 3, 4 verwendet werden. Die Beschaltung ist identisch, so dass diese nachfolgend gemeinsam mit Bezug auf Fig. 3 und 4 beschrieben wird.

Die ersten Dehnungsmessstreifen 3', 3", 3"', 3"" sind hintereinander, d.h. in Reihe geschaltet. Sie definieren eine Gruppe erster Art. Die ersten Dehnungsmessstreifen 3', 3", 3"', 3"" können auch als vier Teilabschnitte eines einzigen ersten Dehnungsmessstreifens 3 betrachtet werden. Jeder der Tastenbereiche 2', 2", 2"', 2"" weist einen zweiten Dehnungsmessstreifen 4', 4",4"', 4"" auf, welcher jeweils benachbart zu dem entsprechenden ersten Dehnungsmessstreifen 3', 3", 3"', 3"" angeordnet ist. Zumindest sind die ersten und zweiten Dehnungsmessstreifen 3, 4 in einem Tastenbereich 2 jedoch derart angeordnet, dass sie beim Drücken eines Tastenbereichs 2 mit einem Finger beide erfasst und damit deformiert werden. Die zweiten Dehnungsmessstreifen 4', 4",4"', 4"" sind nicht wie die ersten Dehnungsmessstreifen 3', 3", 3"', 3"" hintereinander geschaltet, sondern definieren gewissermaßen vier Gruppen zweiter Art mit jeweils genau einem zweiten Dehnungsmessstreifen 4. Der Eingabebereich 10 kann hier auch als einfaches Raster bzw. als einfache Matrix mit einer Reihe und vier Spalten gesehen werden.

Durch eine Überwachung des elektrischen Widerstands der ersten Dehnungsmessstreifen 3', 3", 3"', 3"" kann nun auf einfache Weise festgestellt werden, ob überhaupt eine Kraft auf einen der Tastenbereiche 2', 2", 2"', 2"" ausgeübt wird. Hierzu ist aufgrund der Hintereinanderschaltung der ersten Dehnungsmessstreifen 3', 3", 3"', 3"" nur eine einzige Widerstandsüberwachung notwendig. Es wird nicht die Änderung des elektrischen Widerstands der einzelnen ersten Dehnungsmessstreifen 3', 3", 3"', 3"" überwacht, sondern lediglich die Änderung des elektrischen Widerstands der gesamten Reihe. Dazu können die ersten Dehnungsmessstreifen 3', 3", 3"', 3"" alle identisch ausgebildet sein, beispielsweise jeweils im undeformierten Zustand einen Widerstand von 250 Ohm aufweisen, so dass die gesamte Reihe einen Widerstand im undeformierten Zustand von 1000 Ohm aufweist. Mittels der Änderung des elektrischen Widerstands der zweiten Dehnungsmessstreifen 4', 4",4"', 4"", welche ebenfalls alle identische elektrische Eigenschaften aufweisen können, kann derjenige Tastenbereich 2 des Eingabebereichs 10 ermittelt werden, welcher betätigt wird.

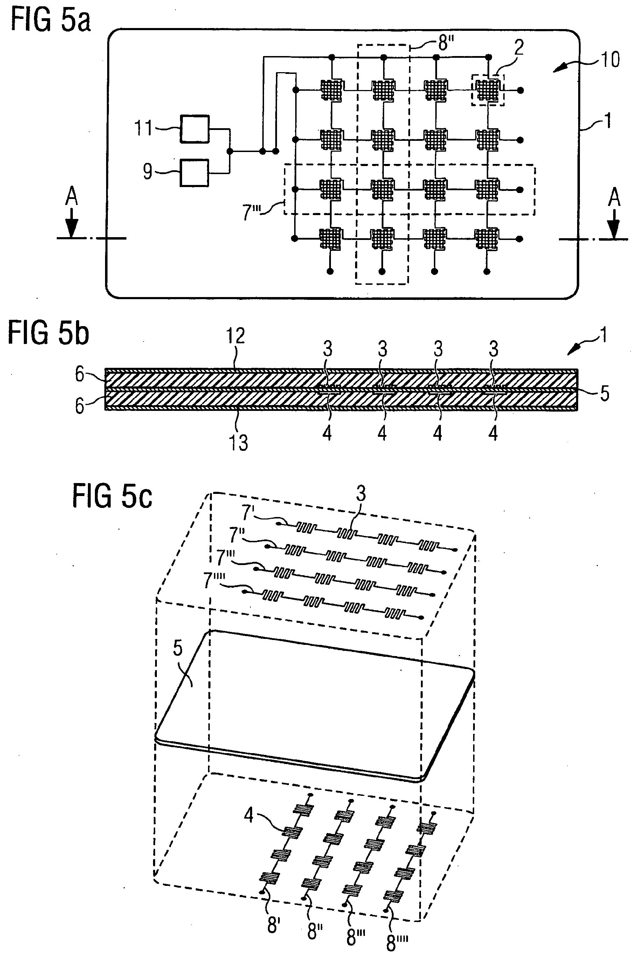

In Fig. 5a bis 5c ist ein portabler Datenträger 1 in Form einer Chipkarte mit einem Eingabereich 10 dargestellt. Der Eingabebereich 10 weist 16 Tastenbereiche 2 auf, welche in einer Matrix mit vier Reihen und vier Spalten angeordnet sind, wobei hier die Reihen horizontal und die Spalten vertikal verlaufen. In Fig. 5a ist einer der Tastenbereiche 2 beispielhaft gekennzeichnet. Die vier Reihen der Tastenbereiche 2 definieren vier Gruppen 7', 7", 7"', 7"" erster Art, wobei jeweils die ersten Dehnungsmessstreifen 3 einer Gruppe 7 erster Art hintereinander geschaltet sind. Dementsprechend definieren die vier Spalten der Tastenbereiche 2 vier Gruppen 8', 8", 8"', 8"" zweiter Art, wobei jeweils die zweiten Dehnungsmessstreifen 4 einer Gruppe 8 zweiter Art hintereinander geschaltet sind.

Zur Vermeidung eines direkten elektrischen Kontakts zwischen den ersten und zweiten Dehnungsmessstreifen 3,4 sind diese auf gegenüberliegenden Seiten der Schicht 5 angeordnet. Dies ist auch in dem in Fig. 5b dargestellten Schnitt entlang der Linie A durch den Datenträger 1 zu erkennen. Die Schicht 5 ist in dem Datenträgerkörper 6 angeordnet, welcher hier Deckschichten 12,13 aufweist. Die Explosionsdarstellung in Fig. 5c zeigt ebenfalls die Anordnung der Gruppen 7', 7", 7"', 7"" erster Art und der Gruppen 8', 8", 8"', 8"" zweiter Art auf den gegenüberliegenden Seiten der Schicht 5. Wie insbesondere in Fig. 5a und 5b erkennbar ist, sind die ersten und zweiten Dehnungsmessstreifen 3, 4 in jedem Tastenbereich 2 jeweils fluchtend zueinander angeordnet. Fig. 5b zeigt analog zu Fig. 2e die Mäanderstrukturen der ersten und zweiten Dehnungsmessstreifen 3, 4, welche senkrecht zueinander verlaufen. Da die Gruppen 7 erster Art und die Gruppen 8 zweiter Art auf unterschiedlichen Seiten der Schicht 5 angeordnet sind und jeweils in Reihenschaltung vorliegen, so dass keine Kreuzungspunkte auftreten, können die Dehnungsmessstreifen 3, 4 zusammen mit den elektrischen Verbindungsleitungen einfach gedruckt werden. Auch ist die Anzahl der Tastenbereiche 2 nur durch die Größe des Datenträgers 1 begrenzt, nicht jedoch durch eine komplexe Führung von Verbindungsleitungen.

Wird nun eine Kraft auf einen der Tastenbereiche 2 ausgeübt, beispielsweise auf den Tastenbereich 2 in der dritten Reihe und zweiten Spalte, ändert sich jeweils der elektrische Widerstand der gesamten Gruppe erster Art und zweiter Art, d.h. in diesem Beispiel der elektrische Widerstand der Gruppe 7"' erster Art und der Gruppe 8" zweiter Art. Da jeder Tastenbereich 2 genau einer Gruppe 7 erster Art und genau einer Gruppe 8 zweiter Art zugeordnet ist und verschiedene Tastenbereiche 2 jeweils verschiedenen Gruppen erster und/ oder zweiter Art zugeordnet sind, ist eine eindeutige Identifizierung des Tastenbereichs 2 möglich, auf den eine Kraft ausgeübt wird. Dies erfolgt anhand der Auswerteeinrichtung 9, welche mit den Gruppen 7, 8 von hintereinander geschalteten Dehnungsmessstreifen 3, 4 elektrisch leitend verbunden ist.

Um eine Eingabe in dem Eingabebereich 10 zuverlässiger detektieren zu können, ist es vorteilhaft, eine Temperaturkompensation vorzusehen, da sich die elektrischen Widerstände der Dehnungsmessstreifen 3, 4 auch schon bei Temperaturschwankungen ändern. Dies kann mittels einer Differenziereinrichtung 11 erfolgen, welche ebenfalls mit den Dehnungsmessstreifen 3, 4 elektrisch leitend verbunden ist, wie in Fig. 5a dargestellt. Auch eine Verbiegung des gesamten Datenträgers 1 kann so von einer Tasteneingabe unterschieden werden. Die Differenziereinrichtung 11 überprüft dazu, ob sich die Widerstandswerte aller Gruppen 7,8 in einem im Wesentlichen gleichen Wertebereich befinden. Solange dies der Fall ist, findet keine Auswertung einer Tasteneingabe statt. Weicht jedoch der Wert des elektrischen Widerstands einer Gruppe von dem Wert der anderen Gruppen ab, wird eine Auswertung durchgeführt. Diese Überwachung kann für alle Gruppen 7,8 oder jeweils für die Gruppen 7 erster Art und die Gruppen 8 zweiter Art durchgeführt werden.

Alternativ kann eine Tasteneingabe mit Hilfe der Differenziereinrichtung 11 auch derart erkannt werden, dass die Differenziereinrichtung 11 eine schnelle Änderung des elektrischen Widerstands in einem Tastenbereich 2 als Eingabe interpretiert, auch wenn sich die Widerstandswerte benachbarter Gruppen ebenfalls ändern. Da die Änderungen der Widerstandswerte der benachbarten Gruppen langsamer erfolgen, kann auf die Gruppe 7 erster Art und die Gruppe 8 zweiter Art rückgeschlossen werden, in der sich der betätigte Tastenbereich 2 befindet.

Die Differenziereinrichtung 11 kann analog oder digital ausgebildet sein. Die Bestimmung der relativen Auslenkung eines Tastenbereichs 2 in einer bestimmten Gruppe 7 erster Art und einer bestimmten Gruppe 8 zweiter Art kann auch per Software erfolgen. Um Strom und/oder Rechenzeit zu sparen, können die A/D-Wandlung und die Software für die Auswertung auch getriggert werden. Beispielsweise kann, wie oben bereits beschrieben, die Auswerteeinrichtung zunächst aus einem Schlafzustand in einen Betriebszustand gebracht werden, wenn ein Tastendruck erfolgt.

## Patentansprüche

1. Chipkarte (1) umfassend eine Vielzahl von Bereichen (2), die jeweils als Tastenbereich gekennzeichnet sind und denen jeweils ein erster und ein zweiter Dehnungsmessstreifen (3, 4) zugeordnet ist, wobei die Dehnungsmessstreifen (3, 4) als gedruckte oder geätzte Strukturen ausgebildet sind,
**gekennzeichnet durch**
- eine Auswerteeinrichtung (9), welche eingerichtet ist,
- anhand einerseits einer Änderung des elektrischen Widerstands eines ersten Dehnungsmessstreifens (3) oder einer Gruppe (7) erster Art von elektrisch in Reihe geschalteten ersten Dehnungsmessstreifen (3), und
- andererseits einer Änderung des elektrischen Widerstands eines zweiten Dehnungsmessstreifens (4) oder einer Gruppe (8) zweiter Art von elektrisch in Reihe geschalteten zweiten Dehnungsmessstreifen (4)
- einen Bereich (2) der Vielzahl von als Taste gekennzeichneten Bereichen (2) zu identifizieren, auf den eine Kraft ausgeübt wird.

2. Chipkarte nach Anspruch 1, **dadurch gekennzeichnet, dass** der erste und zweite Dehnungsmessstreifen (3, 4) eines Bereichs (2) der Vielzahl von als Tastenbereich gekennzeichneten Bereichen (2) auf unterschiedlichen Schichten (5) des Datenträgers angeordnet sind.

3. Chipkarte nach Anspruch 1, **dadurch gekennzeichnet, dass** der erste und zweite Dehnungsmessstreifen (3, 4) eines Bereichs (2) der Vielzahl von als Tastenbereich gekennzeichneten Bereichen (2) auf gegenüberliegenden Seiten einer Schicht (5) des Datenträgers angeordnet sind, vorzugsweise zueinander fluchtend.

4. Chipkarte nach Anspruch 1, **dadurch gekennzeichnet, dass** der erste und zweite Dehnungsmessstreifen (3, 4) eines Bereichs (2) der Vielzahl von als Tastenbereich gekennzeichneten Bereichen (2) in dem Bereich (2) benachbart zueinander angeordnet sind, vorzugsweise auf der gleichen Seite einer Schicht (5) des Datenträgers (6).

5. Chipkarte nach einem der Ansprüche 1 bis 4, **dadurch gekennzeichnet, dass** der erste und zweite Dehnungsmessstreifen (3, 4) eines Bereichs (2) der Vielzahl von als Tastenbereich gekennzeichneten Bereichen (2) jeweils eine Mäanderstruktur aufweisen, wobei vorzugsweise sich die Mäanderstrukturen des ersten und zweiten Dehnungsmessstreifens (3, 4) jeweils in eine allgemeine Richtung erstrecken und diese Richtungen senkrecht zueinander angeordnet sind.

6. Chipkarte nach einem der Ansprüche 1 bis 4, **dadurch gekennzeichnet, dass** der erste und zweite Dehnungsmessstreifen (3, 4) eines Bereichs (2) der Vielzahl von als Tastenbereich gekennzeichneten Bereichen (2) jeweils sternförmig oder rosettenartig ausgebildet sind.

7. Chipkarte nach einem der Ansprüche 1 bis 6, **dadurch gekennzeichnet, dass** der erste und zweite Dehnungsmessstreifen (3, 4) eines Bereichs (2) der Vielzahl von als Tastenbereich gekennzeichneten Bereichen, vorzugsweise der erste und zweite Dehnungsmessstreifen (3, 4) jedes Bereichs (2) der Vielzahl von als Taste ausgebildeten Bereichen, identische elektrische Eigenschaften aufweisen.

8. Chipkarte nach einem der Ansprüche 1 bis 7, **dadurch gekennzeichnet, dass** die Vielzahl der als Tastenbereich gekennzeichneten Bereiche (2) zumindest eine Gruppe (7) erster Art von Bereichen (2) umfasst, wobei die ersten Dehnungsmessstreifen (3) der Bereiche (2) der Gruppe (7) erster Art elektrisch in Reihe geschaltet sind.

9. Chipkarte nach Anspruch 8, **dadurch gekennzeichnet, dass** die Vielzahl der als Tastenbereich gekennzeichneten Bereiche (2) zumindest eine Gruppe (8) zweiter Art von Bereichen (2) umfasst, wobei die zweiten Dehnungsmessstreifen (4) der Bereiche (2) der Gruppe (8) zweiter Art elektrisch in Reihe geschaltet sind.

10. Chipkarte nach Anspruch 9, **dadurch gekennzeichnet, dass** jeder Bereich (2) der Vielzahl von als Tastenbereich gekennzeichneten Bereichen (2) genau einer Gruppe (7) erster Art und genau einer Gruppe (8) zweiter Art zugeordnet ist und verschiedene Bereiche (2) jeweils verschiedenen Gruppen (7, 8) erster und/oder zweiter Art zugeordnet sind.

11. Chipkarte nach einem der Ansprüche 1 bis 10, **dadurch gekennzeichnet, dass** die Vielzahl der als Tastenbereich gekennzeichneten Bereiche (2) in einem Raster auf dem Datenträger angeordnet sind.

12. Chipkarte nach einem der Ansprüche 1 bis 11, **dadurch gekennzeichnet, dass** die Vielzahl von als Tastenbereich gekennzeichneten Bereichen (2) als eine Reihe, als eine Spalte oder als Matrix auf dem Datenträger angeordnet sind.

13. Chipkarte nach Anspruch 12, **dadurch gekennzeichnet, dass** alle Bereiche (2) einer bestimmten Reihe einer bestimmten Gruppe (7) erster Art zugeordnet sind und/ oder alle Bereiche (2) einer bestimmten Spalte einer bestimmten Gruppe (8) zweiter Art zugeordnet sind.

14. Chipkarte nach einem der Ansprüche 1 bis 13, **gekennzeichnet durch** eine Einrichtung (11) zum Detektieren einer Abweichung des elektrischen Widerstands eines ersten oder zweiten Dehnungsmessstreifens (3, 4) oder einer Gruppe (7, 8) erster oder zweiter Art von elektrisch in Reihe geschalteten Dehnungsmessstreifen (3, 4) von dem elektrischen Widerstand eines weiteren ersten oder zweiten Dehnungsmessstreifens (3, 4) oder einer weiteren Gruppe (7, 8) erster oder zweiter Art von elektrisch in Reihe geschalteten Dehnungsmessstreifen (3,4).

## Claims

1. A chip card (1) comprising a multiplicity of regions (2), which are each marked as a key region and to which there is assigned in each case a first and a second strain gauge (3, 4), wherein the strain gauges (3, 4) are configured as printed or etched structures,
**characterized by**
- an evaluation device (9) which is adapted,
- on the basis on the one hand of a change in the electrical resistance of a first strain gauge (3) or a group (7) of a first type of electrically series-connected first strain gauges (3 ), and
- on the other hand a change in the electrical resistance of a second strain gauge (4) or a group (8) of a second type of electrically series-connected second strain gauges (4)
- to identify a region (2) of the multiplicity of regions (2) marked as key to which a force is applied. /

2. The chip card according to claim 1, **characterized in that** the first and second strain gauges (3, 4) of a region (2) of the multiplicity of regions (2) marked as key region are arranged on different layers (5) of the data carrier.

3. The chip card according to claim 1, **characterized in that** the first and second strain gauges (3, 4) of a region (2) of the multiplicity of regions (2) marked as key region are arranged on opposite sides of a layer (5) of the data carrier, preferably in alignment with one another.

4. The chip card according to claim 1, **characterized in that** the first and second strain gauges (3, 4) of a region (2) of the multiplicity of regions (2) marked as key region are arranged to be mutually adjacent in the region (2), preferably on the same side of a layer (5) of the data carrier (6).

5. The chip card according to any of the claims 1 to 4, **characterized in that** the first and second strain gauges (3, 4) of a region (2) of the multiplicity of regions (2) marked as key region each have a meander structure, wherein preferably the meander structures of the first and the second strain gauge (3, 4) each extend in a general direction and these directions are arranged perpendicularly to each other.

6. The chip card according to any of the claims 1 to 4, **characterized in that** the first and second strain gauges (3, 4) of a region (2) of the multiplicity of regions (2) marked as key region are configured to be respectively star-shaped or rosette-like.

7. The chip card according to any of the claims 1 to 6, **characterized in that** the first and second strain gauges (3, 4) of a region (2) of the multiplicity of regions marked as key region, preferably the first and the second strain gauge (3, 4) of each region (2) of the multiplicity of regions configured as a key, have identical electrical properties.

8. The chip card according to any of the claims 1 to 7, **characterized in that** the multiplicity of regions (2) marked as key region comprises at least one group (7) of a first type of regions (2), wherein the first strain gauges (3) of the regions (2) of the group (7) of the first type are electrically connected in series.

9. The chip card according to claim 8, **characterized in that** the multiplicity of regions (2) marked as key region comprises at least one group (8) of a second type of regions (2), wherein the second strain gauges (4) of the regions (2) of the group (8) of the second type are electrically connected in series.

10. The chip card according to claim 9, **characterized in that** each region (2) of the multiplicity of regions (2) marked as key region is allocated to exactly one group (7) of a first type and exactly one group (8) of a second type and different regions (2) are allocated to correspondingly different groups (7, 8) of the first and/or second type.

11. The chip card according to any of the claims 1 to 10, **characterized in that** the multiplicity of regions (2) marked as key region are arranged on the data carrier in a grid.

12. The chip card according to any of the claims 1 to 11, **characterized in that** the multiplicity of regions (2) marked as key region are arranged as a row, as a column or as a matrix on the data carrier.

13. The chip card according to claim 12, **characterized in that** all regions (2) of a certain row are allocated to a certain group (7) of a first type and/or all regions (2) of a certain column are allocated to a certain group (8) of a second type.

14. The chip card according to any of the claims 1 to 13, **characterized by** a device (11) for detecting a deviation of the electrical resistance of a first or second strain gauge (3, 4) or of a group (7, 8) of a first or second type of electrically series-connected strain gauges (3, 4) from the electrical resistance of a further first or second strain gauge (3, 4) or a further group (7, 8) of a first or second type of electrically series-connected strain gauges (3, 4).

## Revendications

1. Carte à puce (1) comprenant une pluralité de zones (2) qui sont respectivement marquées en tant que zone de touche et auxquelles est respectivement affectée une première et une deuxième jauge de déformation (3, 4), les jauges de déformation (3, 4) étant réalisées en tant que structures imprimées ou gravées,
**caractérisée par**
- un équipement d'évaluation (9) qui est équipé pour
- à l'aide, d'une part, d'une modification de la résistance électrique d'une première jauge de déformation (3) ou d'un groupe (7) de premier type de premières jauges de déformation (3) montées électriquement en série, et
- d'autre part, d'une modification de la résistance électrique d'une deuxième jauge de déformation (4) ou d'un groupe (8) de deuxième type de deuxièmes jauges de déformation (4) montées électriquement en série,
- identifier une zone (2) de la pluralité de zones (2) marquées en tant que touche, sur laquelle une force est exercée.

2. Carte à puce selon la revendication 1, **caractérisée en ce que** la première et la deuxième jauge de déformation (3, 4) d'une zone (2) de la pluralité de zones (2) marquées en tant que zone de touche sont agencées sur différentes couches (5) du support de données.

3. Carte à puce selon la revendication 1, **caractérisée en ce que** la première et la deuxième jauge de déformation (3, 4) d'une zone (2) de la pluralité de zones (2) marquées en tant que zone de touche sont agencées sur des côtés opposés d'une couche (5) du support de données, de préférence en alignement l'une par rapport à l'autre.

4. Carte à puce selon la revendication 1, **caractérisée en ce que** la première et la deuxième jauge de déformation (3, 4) d'une zone (2) de la pluralité de zones (2) marquées en tant que zone de touche sont agencées dans la zone (2) de manière adjacente l'une par rapport à l'autre, de préférence du même côté d'une couche (5) du support de données (6).

5. Carte à puce selon une des revendications de 1 à 4, **caractérisée en ce que** la première et la deuxième jauge de déformation (3, 4) d'une zone (2) de la pluralité de zones (2) marquées en tant que zone de touche comportent respectivement une structure en méandres, les structures en méandres de la première et la deuxième jauge de déformation (3, 4) s'étendant de préférence respectivement dans une direction générale et ces directions étant perpendiculaires entre elles.

6. Carte à puce selon une des revendications de 1 à 4, **caractérisée en ce que** la première et la deuxième jauge de déformation (3, 4) d'une zone (2) de la pluralité de zones (2) marquées en tant que zone de touche sont respectivement réalisées en forme d'étoile ou en rosace.

7. Carte à puce selon une des revendications de 1 à 6, **caractérisée en ce que** la première et la deuxième jauge de déformation (3, 4) d'une zone (2) de la pluralité de zones marquées en tant que zone de touche, de préférence la première et la deuxième jauge de déformation (3, 4) de chaque zone (2) de la pluralité de zones réalisées en tant que touche, présentent des propriétés électriques identiques.

8. Carte à puce selon une des revendications de 1 à 7, **caractérisée en ce que** la pluralité des zones (2) marquées en tant que zone de touche comprend au moins un groupe (7) de premier type de zones (2), les premières jauges de déformation (3) des zones (2) du groupe (7) de premier type étant montées électriquement en série.

9. Carte à puce selon la revendication 8, **caractérisée en ce que** la pluralité des zones (2) marquées en tant que zone de touche comprend au moins un groupe (8) de deuxième type de zones (2), les deuxièmes jauges de déformation (4) des zones (2) du groupe (8) de deuxième type étant montées électriquement en série.

10. Carte à puce selon la revendication 9, **caractérisée en ce que** chaque zone (2) de la pluralité de zones (2) marquées en tant que zone de touche est affectée à exactement un groupe (7) de premier type et à exactement un groupe (8) de deuxième type et **en ce que** différentes zones (2) sont respectivement affectées à différents groupes (7, 8) de premier et/ou de deuxième type.

11. Carte à puce selon une des revendications de 1 à 10, **caractérisée en ce que** la pluralité des zones (2) marquées en tant que zone de touche sont agencées dans une grille sur le support de données(6).

12. Carte à puce selon une des revendications de 1 à 11, **caractérisée en ce que** la pluralité de zones (2) marquées en tant que zone de touche sont agencées en tant qu'une rangée, en tant qu'une colonne ou en tant qu'une matrice sur le support de données.

13. Carte à puce selon la revendication 12, **caractérisée en ce que** toutes les zones (2) sont affectées à une rangée précise d'un groupe (7) précis de premier type et/ou **en ce que** toutes les zones (2) sont affectées à une colonne précise d'un groupe (8) de deuxième type.

14. Carte à puce selon une des revendications de 1 à 13, **caractérisée par** une équipement (11) destiné à détecter une divergence de la résistance électrique d'une première ou d'une deuxième jauge de déformation (3, 4) ou d'un groupe (7, 8) de premier ou de deuxième type de jauges de déformation (3, 4) montées électriquement en série par rapport à la résistance électrique d'une autre première ou deuxième jauge de déformation (3, 4) ou d'un autre groupe (7, 8) de premier ou de deuxième type de jauges de déformation (3, 4) montées électriquement en série.
